# EUROPÄISCHE PATENTSCHRIFT

(11) **EP 1 729 053 B1**
(45) Veröffentlichungstag und Bekanntmachung des Hinweises auf die Patenterteilung: **04.02.2009**
(21) Anmeldenummer: 05090207.1
(22) Anmeldetag: 07.07.2005
(51) Int. Cl.: F16L 55/26, B08B 9/04

(54) **Molchbare Vorrichtung für eine Förderanlage zum Fördern eines Produktes durch eine Rohrleitung**
Piggable device for a plant for conveying a product through a pipeline
Dispositif adapté à un passe-diable pour une installation de convoyage d'un produit à travers un conduit

(30) Priorität: 31.05.2005 EP 05090174; 28.06.2005 EP 05090196
(43) Veröffentlichungstag der Anmeldung: 06.12.2006
(73) Patentinhaber: I.S.T. Industrie Service Technologie Beratungs-und Beteiligungsgesellschaft mbH, 22145 Hamburg (DE)
(72) Erfinder: Brzezinski, Lothar, 23795 Fahrenkrug (DE)
(74) Vertreter: Wenzel & Kalkoff

(56) Entgegenhaltungen:
- WO-A-00/70251
- DE-A1- 10 339 353

## Beschreibung

Die Erfindung betrifft eine Vorrichtung für eine Förderanlage zum Fördern eines Produkts durch eine molchbare Rohrleitung nach dem Oberbegriff von Anspruch 1.

Eine derartige Vorrichtung ist aus der WO 00/70251 A1 bekannt.

In Rohrleitungen von Förderanlagen werden Funktionselemente verwendet, welche die Molchbarkeit der Rohrleitung beeinträchtigen oder verhindern, beispielsweise Förderpumpen, Messeinrichtungen beispielsweise zur Bestimmung des Massenflusses, Mischvorrichtungen und dergleichen. Die Molchbarkeit kann beispielsweise durch in die Rohrleitung hineinragende Teile des Funktionselements oder durch einen speziellen Rohrleitungsquerschnitt im Bereich des Funktionselements beeinträchtigt sein.

Zur Herstellung einer durchgehend molchbaren Rohrleitung sind Bypass-Anordnungen zur Umgehung des Funktionselements bekannt. Dabei ist in der Rohrleitung mindestens eine dem Funktionselement vorgeschaltete Vorrichtung zum Umschalten der Rohrleitungsverbindung zwischen dem Rohrleitungsabschnitt mit Funktionselement und der molchbaren Bypass-Rohrleitung montiert. Derartige molchbare Umschaltvorrichtungen sind relativ aufwendig. Zudem verbleibt in der molchbaren Position ein relativ langer nicht molchbarer Rohrleitungsabschnitt.

Die Aufgabe der vorliegenden Erfindung besteht darin, mit einfachen Mitteln eine Vorrichtung zur wahlweisen Herstellung einer Anordnung eines Funktionselements in der Rohrleitung oder Erzeugung einer durchgehend molchbaren Rohrleitung bereitzustellen, wobei die verbleibende nicht molchbare Rohrleitungslänge vorzugsweise relativ kurz ist, und wobei ein ungewolltes Austreten des Produkts aus der Rohrleitung oder eine Kontamination des Produkts durch eintretende Fremdstoffe verhindert wird.

Die Erfindung löst diese Aufgabe mit der Vorrichtung gemäß Anspruch 1 und der Förderanlage gemäß Anspruch 8. Erfindungsgemäß sind zwei verstellbare Rohrleitungsabschnitte vorgesehen, die jeweils zur Verbindung zweier Rohrleitungsanschlüsse der Rohrleitung eingerichtet sind. Um eine durchgehende Molchbarkeit der Rohrleitung zu erreichen, wird einfach der Rohrleitungsabschnitt mit dem Funktionselement durch Verstellen der Verstelleinheit aus der Rohrleitung entfernt und stattdessen der molchbare Rohrleitungsabschnitt in die Rohrleitung eingefügt.

Die Erfindung ist beispielsweise anwendbar auf Förderpumpen, Messeinrichtungen beispielsweise zur Bestimmung des Massenflusses, Mischvorrichtungen und vergleichbaren Vorrichtungen, die nicht molchbar sind bzw. nur mit relativ hohem Aufwand molchbar gemacht werden können.

Zweckmäßigerweise sind die beiden Rohrleitungsabschnitte fest miteinander verbunden und einheitlich verstellbar. Insbesondere handelt es sich beispielsweise um eine einteilige oder in sich starre Verstelleinheit. Die Verstelleinheit wird zweckmäßigerweise im Sinne einer mechanischen Zwangsführung, d.h. auf einem mechanisch festgelegten Weg, zwischen der ersten und der zweiten Durchlassposition verstellt.

Die Erfindung betrifft die Verstellung von in einer Verstelleinheit montierten Rohrleitungsabschnitten. Die Erfindung ist dadurch abgegrenzt von Anordnungen mit ausschließlich feststehenden Rohrleitungsabschnitten bzw. Rohrleitungsabschnitten, bei denen unterschiedliche Rohrleitungsverbindungen mittels verstellbarer Absperrorgane oder Umschalteinrichtungen erzeugt werden. Erfindungsgemäß verstellbar sind also die Rohrleitungsabschnitte selbst, nicht nur etwaige Absperr- oder Umschalteinrichtungen.

Da die Verstelleinheit erfindungsgemäß Verschlussmittel aufweist, welche die zu verbindenden Rohrleitungsanschlüsse beim Verstellvorgang der Verstelleinheit verschließen, wird eine offene Rohrleitung insbesondere beim Verstellvorgang vermieden. Die Rohrleitung ist dann jederzeit vollständig geschlossen, um ein ungewolltes Austreten von Produkt aus der Rohrleitung oder eine Kontamination von Produkt durch eintretende Fremdstoffe zu verhindern.

Weitere vorteilhafte Merkmale gehen aus den Unteransprüchen und der folgenden Beschreibung vorteilhafter Ausführungsbeispiele unter Bezugnahme auf die beigefügten Zeichnungen hervor. Es zeigen:
- Fig. 1:: eine seitliche Ansicht auf eine molchbare Förderanlage in einer ersten Durchlassposition;
- Fig. 2:: eine seitliche Ansicht auf eine Pumpvorrichtung in einer ersten Durchlassposition;
- Fig. 3:: eine seitliche Ansicht auf die Pumpvorrichtung aus Fig. 2 in einer zweiten Durchlassposition;

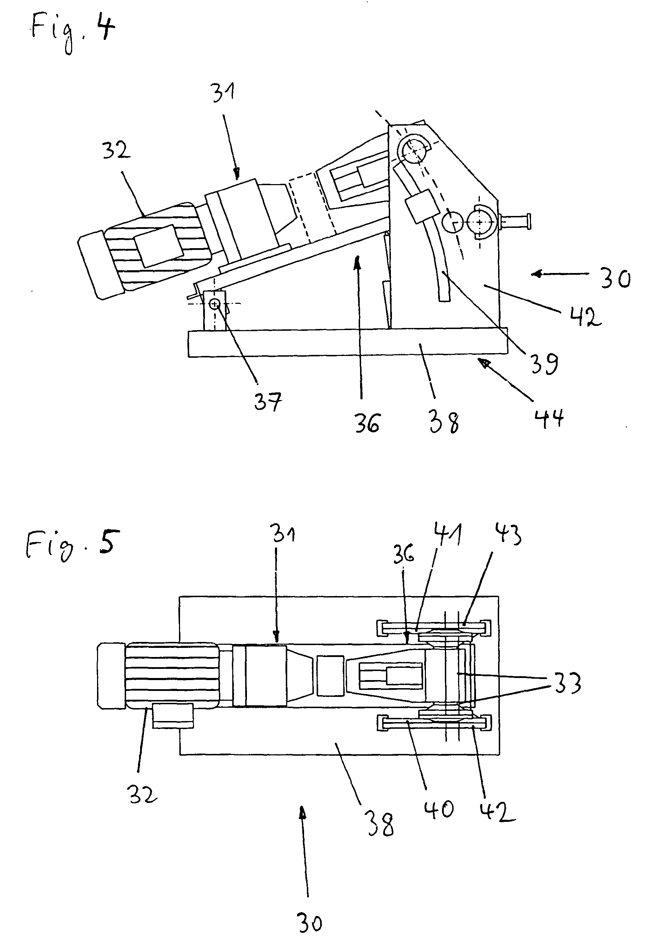

- Fig. 4:: eine Ansicht in Längsrichtung auf die Pumpvorrichtung gemäß Fig. 2 und 3 in der zweiten Durchlassposition;
- Fig. 5:: eine Draufsicht auf die Pumpvorrichtung aus Fig. 4 in der zweiten Durchlassposition;
- Fig. 6:: eine seitliche Ansicht auf eine Messvorrichtung in einer ersten Durchlassposition; und
- Fig. 7:: eine seitliche Ansicht auf die Messvorrichtung aus Fig. 6 in einer zweiten Durchlassposition.

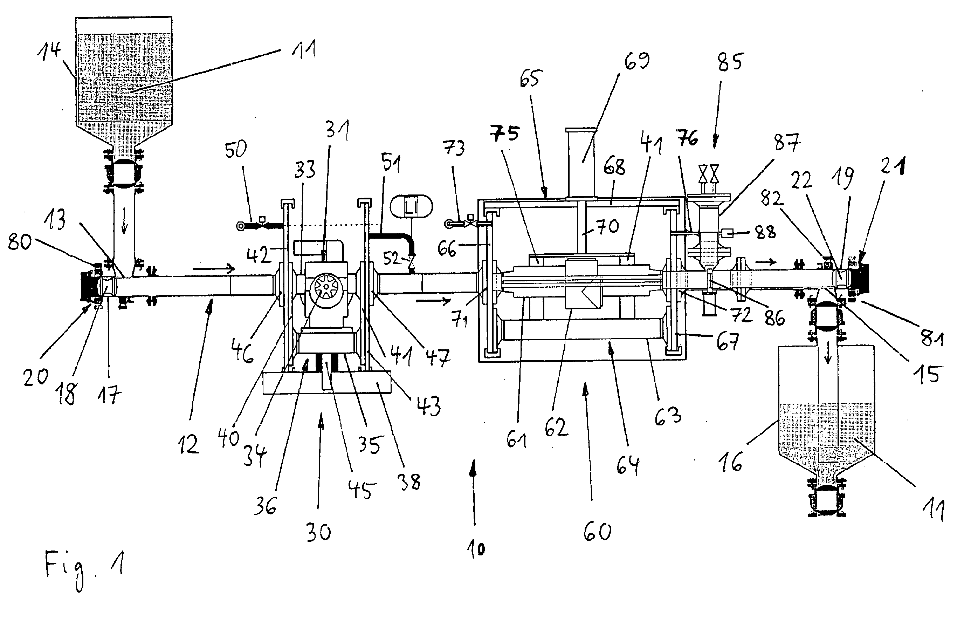

Die Förderanlage 10 dient zum Fördern von Produkt 11 beispielsweise aus einem Reservoir 14 von einem Produkteinlass 13 zu einem Produktauslass 15 beispielsweise in einen Tank 16 durch eine Rohrleitung 12. Die Transportrichtung ist in Fig. 1 durch Pfeile wiedergegeben. An den Enden 20, 21 der Rohrleitung 12 ist jeweils eine Molchstation 17, 19 beispielsweise einfach in Form eines Rohrleitungsabschnitts vorgesehen, in der jeweils ein Rohrleitungsmolch 18, 22 im Förderbetrieb der Förderanlage 10 geparkt ist. Es kann auch ohne weiteres lediglich eine Molchstation und ein Molch an einem der Enden der Rohrleitung 12 vorgesehen sein.

Die Pumpvorrichtung 30 ist ein Beispiel für eine schwenkbare Verstelleinheit. Sie umfasst eine Pumpe 31 mit einem Antrieb 32. Die Pumpe 31 ist mit einem ersten Rohrleitungsabschnitt 33 fest verbunden, in dem ein rotierendes Förderelement 34 der Pumpe 31 beispielsweise in Form eines Flügelrades angeordnet ist. Die Pumpvorrichtung 30 umfasst weiterhin einen zweiten Rohrleitungsabschnitt 35. Der erste Rohrleitungsabschnitt 33 und der zweite Rohrleitungsabschnitt 35 sind zweckmäßigerweise fest miteinander verbunden und zweckmäßigerweise parallel zueinander angeordnet. Die Pumpe 31 und der erste und zweite Rohrleitungsabschnitt 33, 35 sind beispielsweise mittels Verbindungselementen 40, 41 in einer Verstelleinheit 36 fest miteinander verbunden. Die Verbindungselemente 40, 41 sind beispielsweise als plattenförmige Elemente ausgeführt, die jeweils ein Ende der Rohrleitungsabschnitte 33, 35 miteinander verbinden. Das Verbindungselement 40 verbindet ein Ende des Rohrleitungsabschnitts 33 mit einem Ende des Rohrleitungsabschnitts 35, das Verbindungselement 41 verbindet das andere Ende des Rohrleitungsabschnitts 33 mit dem anderen Ende des Rohrleitungsabschnitts 35.

Die Verstelleinheit 36 ist mittels eines Drehgelenks 37 schwenkbar an einem Träger 38 bzw. einer den Träger 38 umfassenden Tragstruktur 44 angelenkt. Das Drehgelenk 37 kann insbesondere an dem fernen Ende an der Pumpe 31 angeordnet sein. Die Schwenkachse der Verstelleinheit 36 ist vorzugsweise parallel zu der Längsachse der Rohrleitung 12 im Bereich der Verstelleinheit 36 orientiert. Die Verstelleinheit 36 kann gegebenenfalls eine Schwenkführung 39 in mit dem Träger 38 verbundenen Seitenträgern 42, 43 aufweisen. Träger 38 und Seitenträger 42, 43 bilden hier die fest montierte Tragstruktur 44. Die Verstelleinheit 36 ist weiterhin mit einer zweckmäßigerweise an der Tragstruktur 44 bzw. dem Träger 38 angebrachten Betätigungseinrichtung 45 zur automatischen Verstellung bzw. Schwenkung der Verstelleinheit 36 verbunden. Die Betätigungseinrichtung 45 kann beispielsweise ein pneumatisch betriebener Kolbenzylinder oder ein elektrischer Antrieb sein.

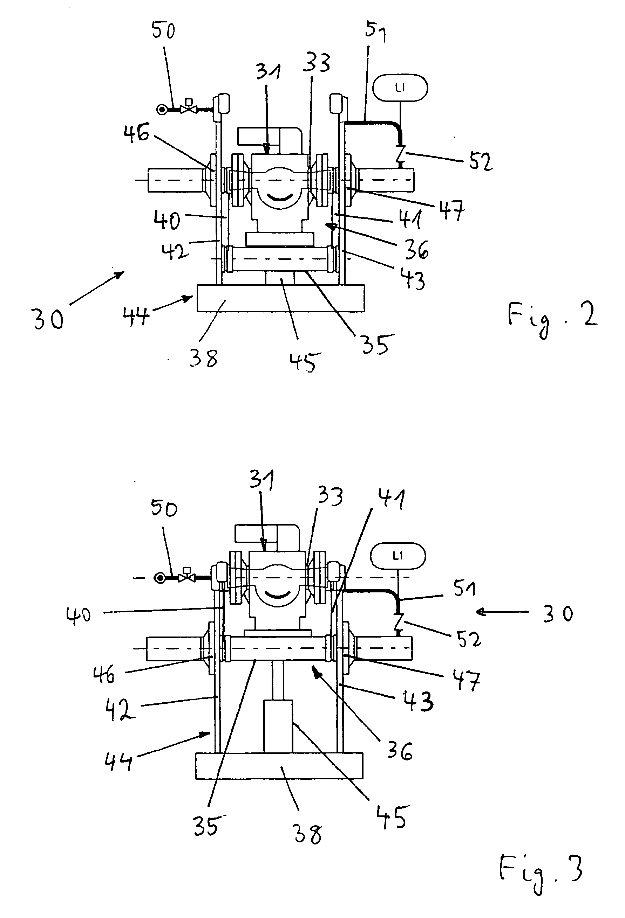

In der in den Fig. 1 und 2 gezeigten ersten Durchlassposition befindet sich die Verstelleinheit 36 in der abgesenkten Stellung. In dieser Position ist der erste Rohrleitungsabschnitt 33 mit entsprechenden Rohrleitungsanschlüssen 46, 47 der Rohrleitung 12 dichtend verbunden, während sich der zweite Rohrleitungsabschnitt 35 in einer abgesenkten Parkposition befindet. Die Rohrleitungsanschlüsse 46, 47 können an den Seitenträgern 42, 43 der Pumpvorrichtung 30 montiert sein. Die Verstelleinheit 36 ermöglicht in der ersten Durchlassposition eine Förderung von Produkt durch die Rohrleitung 12 mittels des in der Rohrleitung 12 angeordneten Förderelements 34 der Pumpe 31.

Wenn die Rohrleitung 12 gemolcht werden soll, insbesondere nach Beendigung der Produktförderung oder bei Bedarf, wird die Betätigungseinrichtung 45 manuell betätigt oder automatisch angesteuert, um die Verstelleinheit 36 durch Schwenkung um die Schwenkachse des Drehgelenks 37 anzuheben. Die Verstellung wird zweckmäßigerweise mittels eines nicht gezeigten Anschlags beendet, wenn die Verstelleinheit 36 die in den Fig. 3 gezeigte zweite Durchlassposition erreicht hat. In dieser Molchposition ist der molchbare zweite Rohrleitungsabschnitt 35 mit den Rohrleitungsanschlüssen 46, 47 dichtend verbunden und der erste Rohrleitungsabschnitt 33 befindet sich in einer Parkposition. Die Rohrleitung 12 ist dann durch den zweiten Rohrleitungsabschnitt 35 molchbar. Zu diesem Zweck weist die weist die Rohrleitung 12 einschließlich des zweiten Rohrleitungsabschnitts 35 einen im wesentlichen konstanten, mit dem Außendurchmesser des Molchs 18 bzw. 22 korrespondierenden Innendurchmesser auf.

Die Pumpvorrichtung 30 kann Einrichtungen 50, 51 zur Reinigung des ersten Rohrleitungsabschnitts 33 in der Parkposition aufweisen. Im vorliegenden Ausführungsbeispiel handelt es sich um eine mit Druckluft beaufschlagbare Leitung 50, die in der Parkposition des ersten Rohrleitungsabschnitts 33 mit einem Ende des ersten Rohrleitungsabschnitts 33 dichtend verbunden ist, und einer Ausgangsleitung 51, die in der Parkposition des ersten Rohrleitungsabschnitts 33 einerseits mit dem anderen Ende des ersten Rohrleitungsabschnitts 33 dichtend verbunden ist und andererseits über ein Ventil 52 in die Förderleitung 12 münden kann. In der Parkposition des ersten Rohrleitungsabschnitts 33 können daher mittels Druckluft Produktreste aus dem ersten Rohrleitungsabschnitt 33 ausgeblasen werden und gegebenenfalls in die Rohrleitung 12 zurückgeführt werden.

Ausgehend von der angehobenen zweiten Durchlassposition der Verstelleinheit 36 kann die Verstelleinheit 36 durch erneute Betätigung des Betätigungselements 45 und entsprechende Schwenkung um die Drehachse des Drehgelenks 37 in die erste Durchlassposition abgesenkt werden. Die Verstellung kann ebenfalls mittels eines nicht gezeigten Anschlags in der ersten Durchlassposition beendet werden.

Ein in einer Parkposition angeordneter Rohrleitungsabschnitt ist vorzugsweise vollständig außerhalb der Rohrleitung 12 angeordnet und zweckmäßigerweise zu dieser beabstandet. Zweckmäßigerweise ist die Schwenkachse des Schwenkgelenks 37 außerhalb der Rohrleitung 12 angeordnet.

In den Zwischenpositionen der Verstelleinheit 36, in der sich die Rohrleitungsabschnitte 33, 35 zwischen den definierten Positionen einschließlich der Durchlassposition und der Parkposition befinden, sind die Anschlüsse 46, 47 der Rohrleitung 12 mit Hilfe von Verschlussmitteln, beispielsweise der Teile 40, 41 der Verstelleinheit 36, vollständig dichtend verschlossen, um ein Herauslecken von Produkt bzw. eine Kontamination von Produkt durch eintretende Verunreinigungen zu verhindern.

Die Messvorrichtung 60 ist ein Beispiel für eine verschiebbare Verstelleinheit und umfasst einen ersten Rohrleitungsabschnitt 61, an dem eine Messeinrichtung 62 zur Bestimmung des Massenflusses durch den ersten Rohrleitungsabschnitt 61 angebracht ist. Der erste Rohrleitungsabschnitt 61 weist an die Messeinrichtung 62 angepasste Leitungsquerschnitte auf, die eine Molchbarkeit des ersten Rohrleitungsabschnitts 61 verhindern. Die Messvorrichtung 60 umfasst weiterhin einen zweiten Rohrleitungsabschnitt 63. Der erste Rohrleitungsabschnitt 61 und der zweite Rohrleitungsabschnitt 63 sind zweckmäßigerweise fest miteinander verbunden und zweckmäßigerweise parallel zueinander angeordnet. Der erste und zweite Rohrleitungsabschnitt 61, 63 sind beispielsweise mittels Verbindungselementen 75, 76 in einer Verstelleinheit 64 fest miteinander verbunden.

Die Verstelleinheit 64 ist in einem Rahmen 65 verschiebbar geführt. Der Rahmen 65 umfasst beispielsweise Seitenteile 66, 67 und ein Verbindungsteil 68. Zum Führen der Verstelleinheit 64 können nicht gezeigte lineare Führungsschienen für die Enden der Rohrleitungsabschnitte 61, 63 vorgesehen sein. Die Verstelleinheit 64 ist weiterhin mit einer zweckmäßigerweise an dem Rahmen 65 angebrachten Betätigungseinrichtung 69 zur automatischen Verstellung bzw. Verschiebung der Verstelleinheit 64 verbunden, beispielsweise mittels einer Kolbenstange 70. Die Betätigungseinrichtung 69 kann beispielsweise ein pneumatisch betriebener Kolbenzylinder oder ein elektrischer Antrieb sein. Die Verstellrichtung der Verstelleinheit 64 ist vorzugsweise senkrecht zu der Rohrleitung 12 im Bereich der Verstelleinheit 64 orientiert.

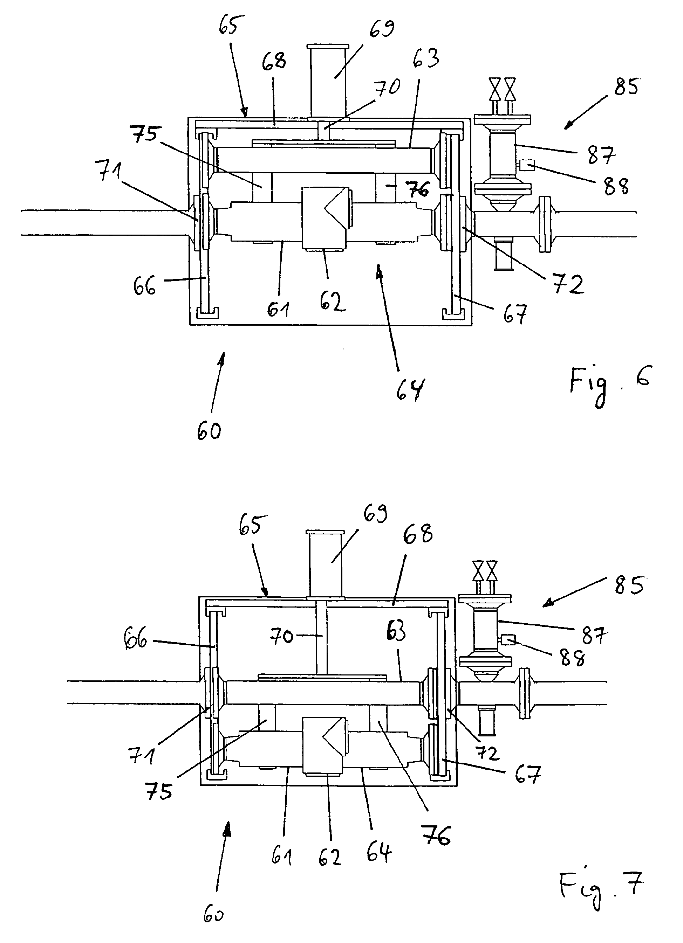

In der in den Fig. 1 und 6 gezeigten ersten Durchlassposition der Verstelleinheit 64 ist der erste Rohrleitungsabschnitt 61 mit entsprechenden Rohrleitungsanschlüssen 71, 72 der Rohrleitung 12 dichtend verbunden, während sich der zweite Rohrleitungsabschnitt 63 in einer von der Rohrleitung 12 beabstandeten Parkposition befindet. Dabei ist die Anordnung der ersten und zweiten Rohrleitungsabschnitte 61, 63 in den Fig. 1 und 6 verschieden. Die Rohrleitungsanschlüsse 71, 72 können an den Seitenteilen 66, 67 des Rahmens 65 montiert sein. Die Verstelleinheit 64 ermöglicht in der ersten Durchlassposition eine Messung des Massenstroms von durch die Rohrleitung 12 fließendem Produkt mittels der in der Rohrleitung 12 angeordneten Messeinrichtung 62.

Wenn die Rohrleitung 12 gemolcht werden soll, insbesondere nach Beendigung der Produktförderung oder bei Bedarf, wird die Betätigungseinrichtung 69 manuell betätigt oder automatisch angesteuert, um die Verstelleinheit 64 in Fig. 6 nach unten zu verschieben. Die Verschiebung wird zweckmäßigerweise mittels eines nicht gezeigten Anschlags beendet, wenn die Verstelleinheit 64 die in den Fig. 7 gezeigte zweite Durchlassposition erreicht hat. In dieser Molchposition ist der molchbare zweite Rohrleitungsabschnitt 63 mit den Rohrleitungsanschlüssen 71, 72 dichtend verbunden, während sich der erste Rohrleitungsabschnitt 61 sich in einer von der Rohrleitung 12 beabstandeten Parkposition befindet. Die Rohrleitung 12 ist dann durch den zweiten Rohrleitungsabschnitt 63 molchbar. Zu diesem Zweck weist die weist die Rohrleitung 12 einschließlich des zweiten Rohrleitungsabschnitts 63 einen im wesentlichen konstanten, mit dem Außendurchmesser des Molchs 18 bzw. 22 korrespondierenden Innendurchmesser auf.

Die Messvorrichtung 60 kann Einrichtungen 73, 74 zur Reinigung des ersten Rohrleitungsabschnitts 61 in der Parkposition aufweisen, beispielsweise eine mit Druckluft beaufschlagbare Leitung 73, die in der Parkposition des ersten Rohrleitungsabschnitts 61 mit einem Ende des ersten Rohrleitungsabschnitts 61 dichtend verbunden ist, und einer Ausgangsleitung 74, die in der Parkposition des ersten Rohrleitungsabschnitts 61 einerseits mit dem anderen Ende des ersten Rohrleitungsabschnitts 61 dichtend verbunden ist und andererseits beispielsweise in die Förderleitung 12 oder eine mit der Förderleitung 12 verbundene Entlüftungseinrichtung 85 münden kann. In der Parkposition des ersten Rohrleitungsabschnitts 61 können daher mittels Druckluft Produktreste aus dem ersten Rohrleitungsabschnitt 61 ausgeblasen werden und gegebenenfalls in die Rohrleitung 12 zurückgeführt werden.

Ausgehend von der zweiten Durchlassposition der Verstelleinheit 64 kann die Verstelleinheit 64 durch erneute Betätigung des Betätigungselements 69 in die erste Durchlassposition verschoben werden. Die Verstellung kann ebenfalls mittels eines nicht gezeigten Anschlags in der ersten Durchlassposition beendet werden.

In den Zwischenpositionen der Verstelleinheit 64, in der sich die Rohrleitungsabschnitte 61, 63 zwischen den definierten Positionen einschließlich der Durchlassposition und der Parkposition befinden, sind die Anschlüsse 71, 72 der Rohrleitung 12 mit Hilfe von nicht gezeigten Verschlussmitteln vollständig dichtend verschlossen, um ein Herauslecken von Produkt bzw. eine Kontamination von Produkt durch eintretende Verunreinigungen zu verhindern.

In der den Fig. 3 und 7 entsprechenden Molchposition der Förderanlage 10 ist die gesamte Rohrleitung 12 vom eingangsseitigen Ende 20 bis zum ausgangsseitigen Ende 21 vollständig mittels des Molchs 18 bzw. 22 molchbar. Dazu wird beispielsweise ein vor der Ruheposition des Molchs 18 mündender Druckluftanschluss 80 mit Druckluft beaufschlagt, um den Molch 18 durch die Rohrleitung 12 bis zu dem auslassseitigen Ende 21 zu treiben, wodurch die Rohrleitung 12 von Produktresten gereinigt wird. Durch Beaufschlagung eines endseitigen Druckluftanschlusses 82 kann der Molch 18 durch die Rohrleitung 12 zurück in die Parkposition gedrückt werden. Durch einen endseitigen Druckluftanschlusses 81 kann gegebenenfalls der Molch 22 durch die Rohrleitung 12 getrieben werden.

In der Förderanlage 10 kann in Förderrichtung hinter der Messvorrichtung 60 eine Entlüftungsvorrichtung 85 in der Rohrleitung 12 angeordnet sein. Bei Inbetriebnahme der Förderanlage 10 wird ein Sperrelement 86 in die Rohrleitung 12 eingebracht und der Molch 22 mittels Druckluft bis zum Anschlag an das Sperrelement 86 vorgetrieben und dort gehalten, so dass der Molch 22 die Rohrleitung 12 im Bereich der Entlüftungsvorrichtung 85 dichtend verschließt. Anschließend wird mittels der Pumpe 31 Produkt durch die Rohrleitung 12 gefördert und steigt in einem Steigrohr 87 an, bis ein Füllstandsensor 88 das aufsteigende Produkt erfasst. Anschließend wird das Sperrelement 86 aus der Rohrleitung 12 herausgefahren und der Molch 22 mittels des Produkts in die Molchstation 19 zurückgetrieben.

In der Förderanlage 10 gemäß Fig. 1 sind zwei erfindungsgemäße Verstellvorrichtungen, nämlich die Pumpvorrichtung 30 und die Messvorrichtung 60 vorgesehen. Die Erfindung ist aber nicht auf diese Anwendungen beschränkt.

Die Förderanlage 10 gemäß Fig. 1 ist insbesondere zur Förderung von Flüssigkeiten mittels der Pumpvorrichtung 30 eingerichtet. Die Erfindung ist aber hierauf keineswegs beschränkt und beispielsweise auch bei pneumatischen Förderanlagen für Schüttgut, Pulver oder Granulat einsetzbar.

Die Erfindung ist weiterhin nicht auf linear geformte erste und zweite Rohrleitungsabschnitte 33, 35, 61, 63 beschränkt.

## Patentansprüche

1. Vorrichtung für eine Förderanlage (10) zum Fördern eines Produkts (11) durch eine molchbare Rohrleitung (12), mit einem in einem ersten Abschnitt (33; 61) der Rohrleitung (12) angeordneten, die Molchbarkeit beeinträchtigenden Funktionselement (34; 62), und einem molchbaren zweiten Rohrleitungsabschnitt (35; 63) zur Herstellung einer durchgehend molchbaren Rohrleitung, wobei die Vorrichtung eine Verstelleinheit (36; 64) umfasst, in der der erste Rohrleitungsabschnitt (33; 61) und der zweite Rohrleitungsabschnitt (35; 63) montiert sind und die zwischen einer ersten Durchlassposition, in der der erste Rohrleitungsabschnitt (33; 61) mit zwei Rohrleitungsanschlüssen (46, 47; 71, 72) der Rohrleitung (12) verbunden ist, und einer zweiten Durchlassposition, in der der molchbare zweite Rohrleitungsabschnitt (35; 63) zur Herstellung einer durchgehend molchbaren Rohrleitung (12) mit den Rohrleitungsanschlüssen (46, 47; 71, 72) verbunden ist, verstellbar ist, **dadurch gekennzeichnet, dass** Verschlussmittel zum Verschließen der Rohranschlüsse (46, 47; 71, 72) beim Verstellen der Verstelleinheit (36; 64) vorgesehen sind.

2. Vorrichtung nach Anspruch 1, **dadurch gekennzeichnet, dass** die Verstelleinheit (36) zwischen der ersten Durchlassposition und der zweiten Durchlassposition dreh- bzw. schwenkbar ist.

3. Vorrichtung nach Anspruch 2, **dadurch gekennzeichnet, dass** die Dreh- bzw. Schwenkachse im wesentlichen parallel zu der Rohrleitung (12) im Bereich der Verstelleinheit (36) orientiert ist.

4. Vorrichtung nach Anspruch 1, **dadurch gekennzeichnet, dass** die Verstelleinheit (64) zwischen der ersten Durchlassposition und der zweiten Durchlassposition verschiebbar ist.

5. Vorrichtung nach Anspruch 4, **dadurch gekennzeichnet, dass** die Verstelleinheit (64) linear verschiebbar ist.

6. Vorrichtung nach Anspruch 5, **dadurch gekennzeichnet, dass** die Verschiebungsachse im wesentlichen senkrecht zu der Achse der Rohrleitung (12) im Bereich der Verstelleinheit (36; 64) orientiert ist.

7. Vorrichtung nach einem der Ansprüche 1 bis 6, **dadurch gekennzeichnet, dass** die Verschlussmittel von Oberflächen der Verstelleinheit (36; 64) gebildet werden.

8. Förderanlage zum Fördern eines Produkts durch eine molchbare Rohrleitung, mit mindestens einer Vorrichtung (30; 60) nach einem der Ansprüche 1 bis 7 zur wahlweisen Anordnung eines Funktionselement (34; 62) in der Rohrleitung (12) oder Erzeugung einer durchgehend molchbaren Rohrleitung (12).

## Claims

1. Apparatus for a pumping facility (10) for pumping a product (11) through a piggable pipeline (12), with a functional component (34; 62) arranged in a first section (33; 61) of the pipeline (12) and affecting the piggability and with a piggable second pipeline section (35; 63) for making a continuously piggable pipeline, the apparatus comprising an adjusting unit (36; 64) in which the first pipeline section (33; 61) and the second pipeline section (35; 63) are mounted and which is adjustable between a first outlet position in which the first pipeline section (33; 61) is connected to two pipeline connections (46, 47; 71, 72) of the pipeline (12) and a second outlet position in which the piggable second pipeline section (35; 63) is connected to the pipeline connections (46, 47; 71, 72) for making a continuously piggable pipeline (12), **characterized in that** sealing means are provided for sealing the pipe connections (46, 47; 71, 72) when the adjusting unit (36; 64) is adjusted.

2. Apparatus according to claim 1, **characterized in that** the adjusting unit (36) is rotatable or pivotable between the first outlet position and the second outlet position.

3. Apparatus according to claim 2, **characterized in that** the rotation or swivel axis is oriented substantially parallel to the pipeline (12) in the range of the adjusting unit (36).

4. Apparatus according to claim 1, **characterized in that** the adjusting unit (64) is slidable between the first outlet position and the second outlet position.

5. Apparatus according to claim 4, **characterized in that** the adjusting unit (64) is linearly slidable.

6. Apparatus according to claim 5, **characterized in that** the sliding axis is oriented substantially perpendicular to the axis of the pipeline (12) in the range of the adjusting unit (36; 64).

7. Apparatus according to any of claims 1 to 6, **characterized in that** the sealing means are formed by surfaces of the adjusting unit (36; 64).

8. Pumping facility for pumping a product through a piggable pipeline with at least one apparatus (30; 60) according to any of claims 1 to 7 for optional arrangement of a functional component (34; 62) in the pipeline (12) or making a continuously piggable pipeline (12).

## Revendications

1. Dispositif pour une installation de convoyage (10) destiné à convoyer un produit (1) à travers un conduit raclable (12), comprenant un élément fonctionnel (34 ; 62) altérant l'aptitude au raclage, disposé dans une première section (33 ; 61) du conduit, et une seconde section de conduit raclable (35 ; 63) destinée à établir un conduit raclable en continu, le dispositif comportant une unité de réglage (36 ; 64) dans laquelle la première section de conduit (33 ; 61) et la seconde section de conduit (35 ; 63) sont montées et qui peut être réglée entre une position de passage, dans laquelle la première section de conduit (33 ; 61) est reliée à deux raccords de conduit (46, 47 ; 71, 72) du conduit (12), et une seconde position de passage, dans laquelle la seconde section de conduit raclable (35 ; 63) destinée à établir un conduit raclable en continu (12) est reliée aux raccords de conduit (46, 47 ; 71, 72), **caractérisé en ce que** des moyens de fermeture destinés à fermer les raccords de conduit (46, 47 ; 71, 72) lors du réglage de l'unité de réglage (36 ; 64) sont prévus.

2. Dispositif selon la revendication 1, **caractérisé en ce que** l'unité de réglage (36) peut être amenée à tourner et/ou pivoter entre la première position de passage et la seconde position de passage.

3. Dispositif selon la revendication 2, **caractérisé en ce que** l'axe de rotation et/ou de pivotement est orienté sensiblement parallèlement au conduit (12) dans la zone de l'unité de réglage (36).

4. Dispositif selon la revendication 1, **caractérisé en ce que** l'unité de réglage (64) peut être déplacée entre la première position de passage et la seconde position de passage.

5. Dispositif selon la revendication 4, **caractérisé en ce que** l'unité de réglage (64) peut être déplacée de manière linéaire.

6. Dispositif selon la revendication 5, **caractérisé en ce que** l'axe de déplacement est orienté sensiblement perpendiculairement à l'axe du conduit (12) dans la zone de l'unité de réglage (36 ; 64).

7. Dispositif selon l'une quelconque des revendications 1 à 6, **caractérisé en ce que** les moyens de fermeture sont formés par les surfaces de l'unité de réglage (36 ; 64).

8. Installation de convoyage destinée à convoyer un produit à travers un conduit raclable, comprenant au moins un dispositif (30 ; 60) selon l'une quelconque des revendications 1 à 7 destiné à disposer au choix un élément fonctionnel (34 ; 62) dans le conduit (12) ou à produire un conduit raclable en continu (12).
